# EUROPEAN PATENT SPECIFICATION

(11) **EP 3 982 706 B1**
(45) Date of publication and mention of the grant of the patent: **03.04.2024**
(21) Application number: 20737542.9
(22) Date of filing: 11.06.2020
(51) Int. Cl.: A01B 3/421, A01B 15/14

(54) **MOUNTED REVERSIBLE PLOUGH**
ANBAUDREHPFLUG
CHARRUE RÉVERSIBLE MONTÉE

(30) Priority: 11.06.2019 IT 201900008649
(43) Date of publication of application: 20.04.2022
(73) Proprietor: Maschio Gaspardo S.p.A., 35011 Campodarsego (PD) (IT)
(72) Inventor: MASCHIO, Andrea, 33075 Morsano al Tagl.to (PN) (IT); MILAN, Federico, 30026 Portogruaro (VE) (IT); DE LORENZI, Massimo, 33079 Sesto al Reghena (PN) (IT)
(74) Representative: Locas, Davide
(86) International application number: PCT/IB2020/055496
(87) International publication number: WO 2020/250176

(56) References cited:
- EP-A1- 0 534 691
- EP-A1- 3 427 559
- WO-A1-2014/067508
- DE-T2- 68 919 954
- FR-A1- 2 517 506
- US-A- 4 207 951

## Description

The present invention relates to a reversible plough of the mounted type including the features mentioned in the preamble of the main claim. An example of a reversible plough of the mounted type is described in EP3427559. There is normally provided in mounted reversible ploughs an inversion group with hydraulic actuation which is provided for the rotation of the frame of the plough through 180° about the inversion axis in order to cause the respective rows of ploughing elements to be alternately operational on the ground to be ploughed in accordance with the position of the inversion block about the inversion axis. There is normally further provision for the working width of the ploughing elements to be adjustable. When this adjustment is varied, there is also varied the inclination of the frame which carries the ploughing groups with respect to the inversion axis of the plough. However, this involves problems because the inversion group is actuated by the rotation of the frame through 180° about the inversion axis. For example, when the working width is high, the centre of gravity of the rotating portion of the plough could impede the completion of the rotation or portions of the plough could strike the ground in an undesirable manner.

In order to prevent this disadvantage, there is provided a linearization system which acts on the articulated quadrilateral, with which the frame of the plough is secured to the inversion device, "straightening" the frame of the plough with respect to the inversion axis via a linearization actuator with hydraulic actuation, the travel of which is limited by means of a limiting device.

It is known from WO2014/067508 to limit this travel via mechanical stops which cause a pressure peak in the hydraulic actuation system of the linearization actuator so that the inversion actuator is activated when the linearization actuator has caused the desired linearization action.

However, the mechanical limiters involve different disadvantages which are overcome by using an interception valve which is controlled as described in EP3427559. In this case, there is used an interception valve for the flow of pressurized fluid which acts on the linearization actuator. This valve is mounted on the frame of the plough and actuated by means of a rod, which is in turn connected to the fulcrum with which the linearization actuator is hinged to the inversion device. In this manner, it is advantageously possible for the linearization of the frame to be carried out by measuring the position of the frame of the plough relative to the inversion device with respect to the axis of the linearization device.

In this manner, the actuation of the interception valve takes into account the adjustment of the rod which is provided for the variation of the trailing of the plough, that is to say, the relative position between the plough and tractor. On the other hand, this structure involves the rod which provides for the actuation of the interception valve being dangerously exposed to accidental knocks which can produce deformation thereof, and further involves the use of a large number of lever assemblies with are extremely sensitive to possible occurrences of mechanical play which consequently have to be taken up. Finally, the arrangement of the valve and the actuation lever thereof is exposed to foreign bodies, such as rocks, timbers and the like, which may compromise the operation thereof.

Other examples of ploughs are described in US 4207951 or FR 2517506. The technical problem addressed by the present invention is to provide a mounted reversible plough which is structurally and functionally configured to overcome at least one of the disadvantages set out with reference to the cited prior art.

This problem is at least partially solved by the invention by means of a mounted reversible plough which is constructed according to one or more of the appended claims.

With the present invention, the interception valve for the flow of pressurized fluid supplied to the valve actuator is actuated in accordance with the relative angular position of the articulation arm with respect to the articulation axis instead of in accordance with the position of the frame. It is thereby possible to receive the valve in a protected position in the articulation arm and preferably to control it via a cam profile and a feeler or cam follower. Preferably, the cam profile and the feeler or cam follower are carried on the inversion device about the articulation axis and on the articulation arm, respectively, or vice versa. This system solves the problem of assembly play and provides a control structure of the valve which is very simple, well-protected and effective.

The invention allows the angle between the articulation arm and the rotation axis of the frame to be kept constant and equal to a desired value (which may be adjustable) when the frame has to be rotated through 180° as a result of the effect of the inversion device by adjusting the supply of the pressurized fluid to the linearization actuator. In practice, the interception valve blocks the flow of pressurized fluid to the linearization actuator by varying the travel thereof in accordance with the adjustment of the working width imposed.

However, the adjustment of the trailing influences the adjustment of this angle which consequently has to be modified in the event of variation of the trailing.

On the basis of another aspect of the invention, the articulation arm and the linearization actuator form opposite sides of an articulated quadrilateral, the remaining sides of which are preferably formed by the inversion device between the articulation axis and an axis for rotatably securing a first end of the linearization actuator at the side directed towards the inversion device and away from the frame between the linearization axis and an axis for rotatably securing a second opposite end of the linearization actuator.

The articulation arm is preferably at least partially enclosed and the interception valve is at least partially received and sheltered by the enclosure of the arm.

The features and advantages of the invention will be better appreciated from the detailed description of a preferred embodiment thereof which is illustrated by way of non-limiting example with reference to the appended drawings, in which:

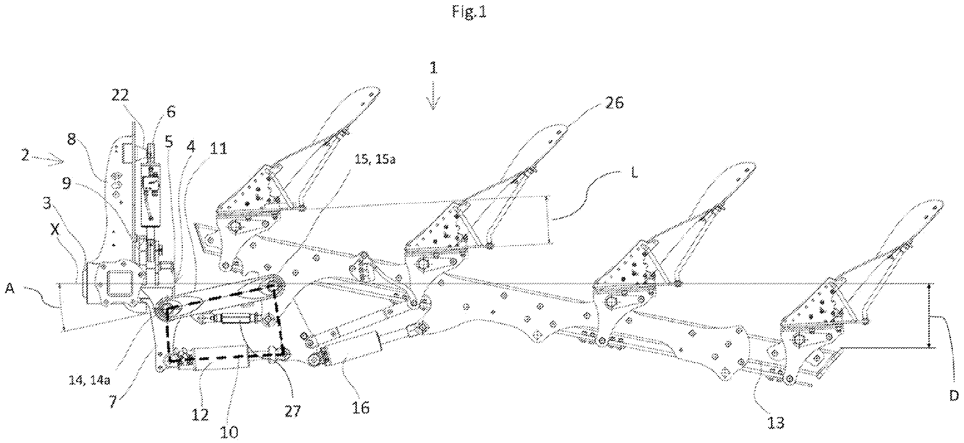

- Figure 1 is a general view of the reversible plough;
- Figure 2 is a view of a detail of the plough of Figure 1;
- Figures 3A and 3B are general views of the plough of Figure 1, in which the working width between the ploughing elements is at a minimum and maximum, respectively;

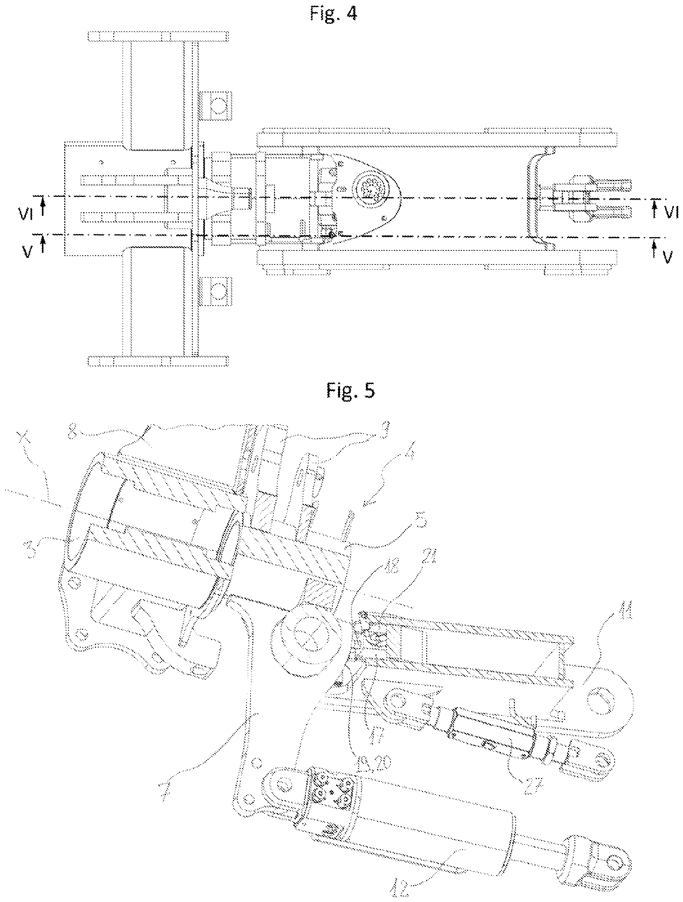

- Figure 4 is a plan view of a detail of the plough of Figure 1;
- Figure 5 is a perspective cross-sectional view along the line V-V of the detail of Figure 4;

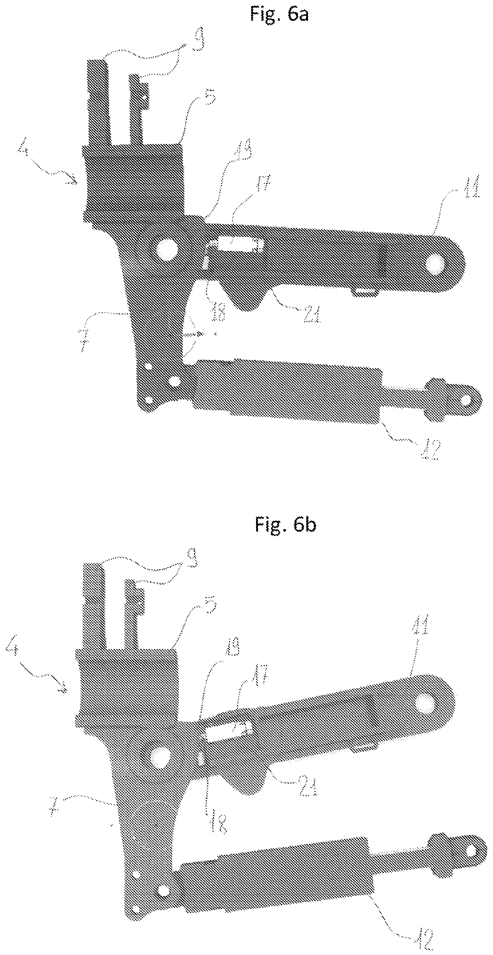

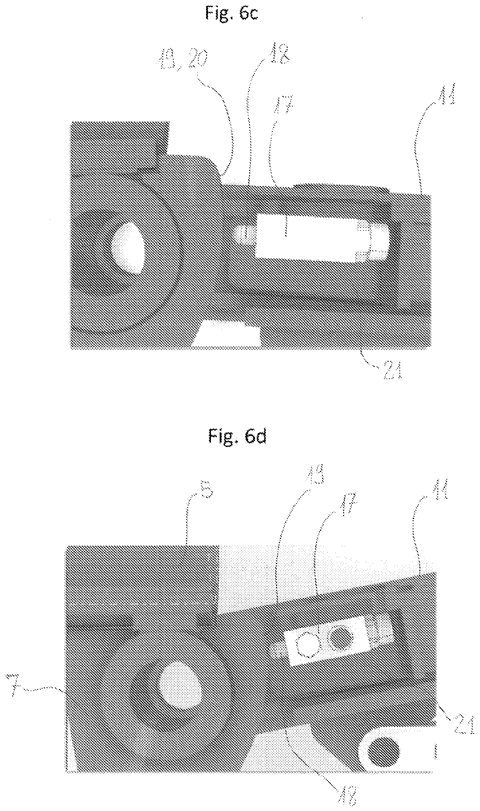

- Figures 6a, 6b, 6c and 6d are cross-sections along the line VI-VI of the detail of Figure 4, corresponding to different angular positions of the articulation arm of the plough of the preceding Figures;
- Figure 7 is a perspective view of the detail of Figure 4;
- Figure 8 is a plan view of a detail of the plough of Figure 1;
- Figure 9 is an exploded view of the detail of Figure 8;
- Figure 10 is a perspective view of the detail of Figure 8;
- Figure 11 is a cross-section along the line XI-XI of the detail of Figure 8.

In the Figures, there is generally designated 1 a mounted plough of the reversible type. The plough 1 is provided with an attachment member 2 with respect to the tractor, for example, of the type with three points with a mount 8 which carries a main pin 3, the axis X of which defines the inversion axis of the plough.

There is mounted on the pin 3 an inversion device 4 which, in some embodiments, includes a bush 5 which can rotate freely about the inversion axis in the event of actuation of an inversion actuator 6, for example, with a hydraulic jack.

The inversion device 4 comprises an inversion arm 7 and an actuation arm 9 which are mutually opposite and which extend in a substantially radial direction from the bush 5, that is to say, in a substantially perpendicular direction to the inversion axis X.

There is preferably hinged to the actuation arm 9 an end of the inversion actuator 6, the opposite end of which is in some embodiments secured in a pivoting manner to a pin 22 which is fixedly joined to the mount 8.

In preferred embodiments, the inversion arm 7 constitutes a side of an articulated quadrilateral which is generally designated 10 and the remaining three sides of which are preferably constituted by an articulation arm 11, by a linearization actuator 12 and by a portion of a frame, which is generally designated 13, of the plough.

Advantageously, the portion of the frame 13 is contained between the linearization axis 15 and a rotatable securing axis of a second end of the linearization actuator 12 opposite the inversion arm 7.

In some embodiments, the articulation arm 11 and the linearization actuator 12 are hinged to the inversion arm 7 in the vicinity of the bush 5 and in a distal position therefrom, respectively. The hinging axis of the articulation arm 11 is referred to as an articulation axis 14 and is formed by a pin 14a. The opposite end of the articulation arm 11 is preferably hinged to the frame 13 by means of a pin 15a, the axis 15 of which is referred to below as the linearization axis of the frame 13.

According to another aspect, there is further provided between the articulation arm 11 and the frame 13 a rod 27 which is, for example, constructed as a mechanical screw coupling or a similar device which may be hydraulic and which is provided for adjusting the trailing of the plough.

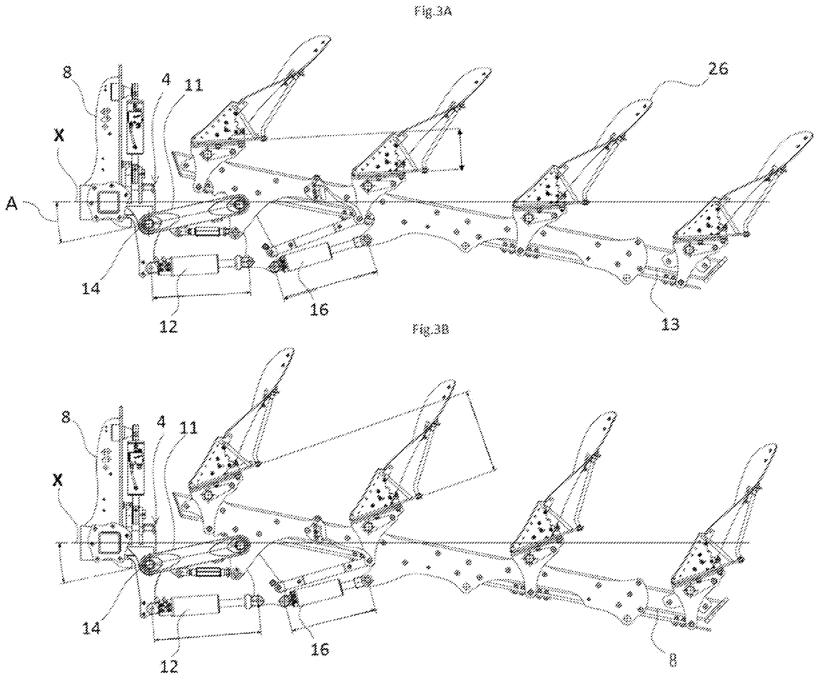

In preferred embodiments, there are mounted on the frame 13 two opposing rows of ploughing elements 26, the working width L of which can be adjusted by means of an adjustment actuator 16 which serves to continuously vary the working width L between consecutive ploughing elements 26 between a minimum position (Figure 3A) and a maximum position (Figure 3B). The actuator 16 is preferably of the hydraulic jack type but there is provision for it to be able to be actuated differently, for example, electro-mechanically.

The linearization actuator 12 is actuated by a pressurized fluid, the flow of which can be intercepted by means of a valve 17 in order to limit the linearization of the frame controlled by the linearization actuator when the frame is rotated about the inversion axis X.

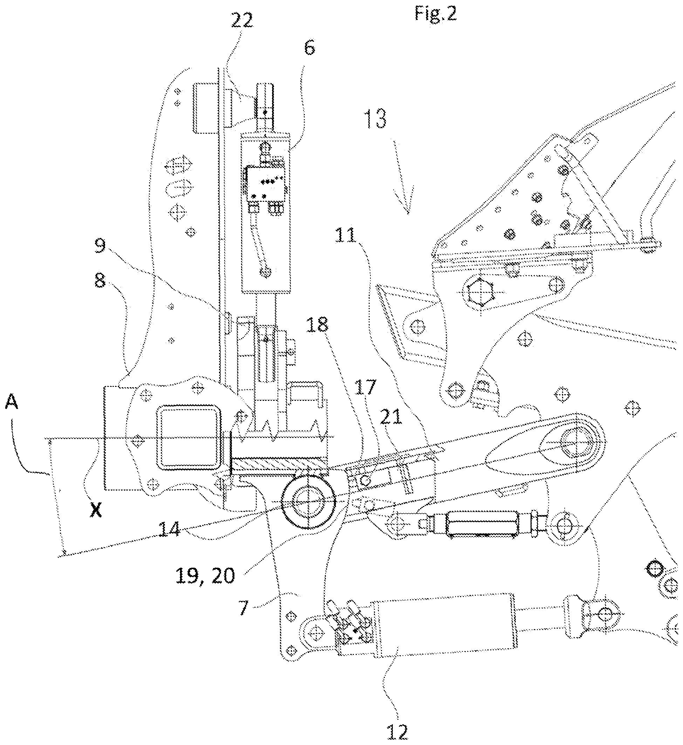

Preferably, this valve 17 is actuated in accordance with the relative angular position of the articulation arm 11 with respect to the articulation axis 14. In the embodiment of Figure 2, the interception valve 17 is depicted in two alternative positions: valve closed (valve arranged at the top and illustrated as a solid line) and valve open (valve arranged at the bottom and illustrated as a broken line).

The valve 17 preferably comprises actuation with a feeler 18 which is connected to a cam profile 19 in such a manner that the valve is closed or opened in accordance with the position of the feeler 18 along the cam profile 19. Below, reference will also be made to the feeler 18 as a cam follower 18.

The cam profile 19 is advantageously received on a profiled surface 20 on the inversion arm 7 which surrounds the articulation axis 14.

In some embodiments, however, the valve 17 with the relevant feeler 18 is mounted in a recess 21 of the articulation arm 11 which is enclosed for the purpose and which protects the valve 17 in a position protected from accidental impacts and the foreign material. The cam profile 19 and the position relative thereto of the interception valve 17 are selected, that is to say, configured, so that the angle of the articulation arm 11 with respect to the inversion axis 7 is constant (but optionally adjustable) and independent of the adjustment of the working width L between consecutive ploughing elements 26.

This system results in a variation of the working width L between consecutive ploughing elements, in a manner adjusted by means of the adjustment actuator 16, during the step of rotating the frame 13, the position of the articulation arm 11 remains the same. This is brought about because the angle A formed between the articulation arm 11 and the inversion axis X remains unchanged because the valve 17 intercepts the flow of pressurized oil which is supplied to the linearization actuator 12, varying the travel thereof in accordance with the working width between consecutive ploughing elements imposed by the adjustment actuator 16.

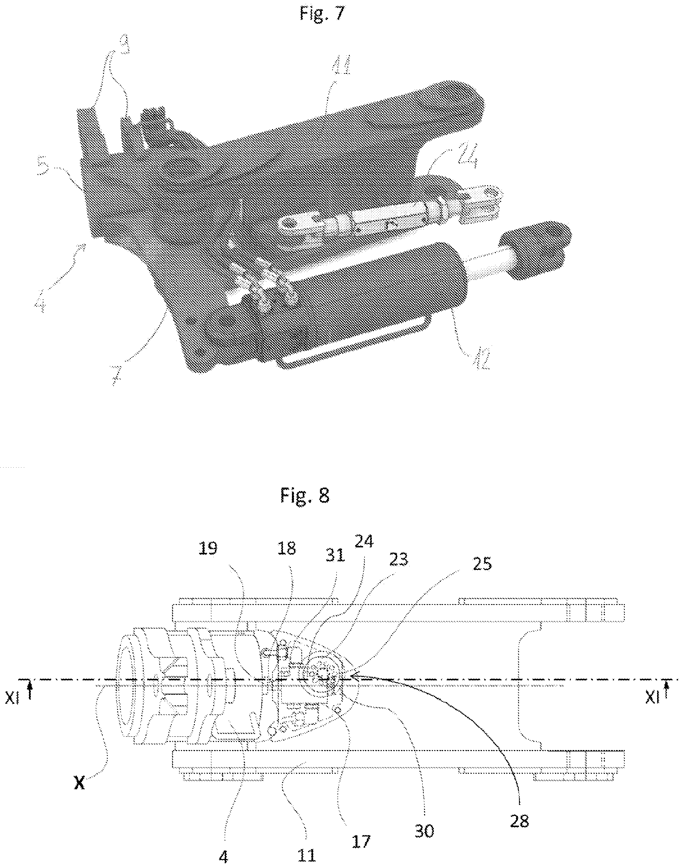

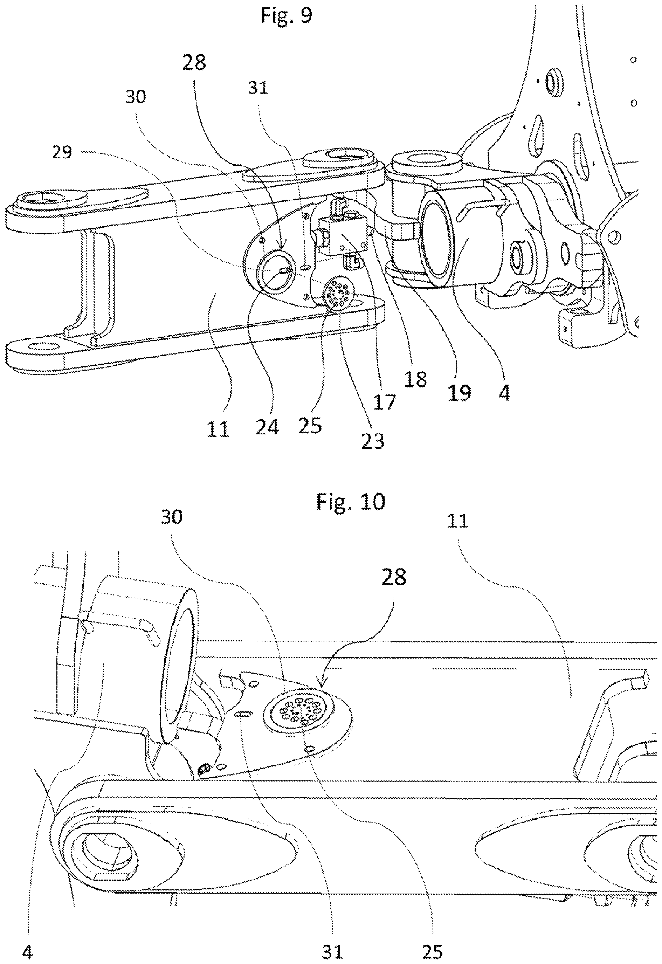

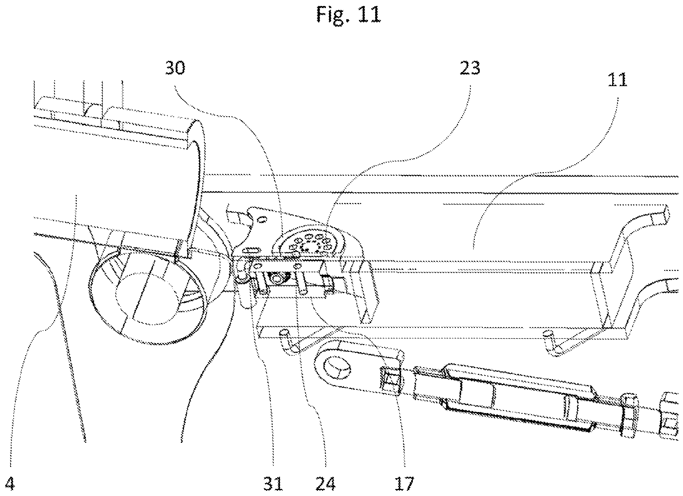

With particular reference to Figures 8 to 11, in some embodiments the interception valve 17 is movable away from and towards the cam profile 19. Preferably, the interception valve 17 is movable in the direction of the main dimension of the articulation arm 11. Preferably, the interception valve 17 is fixed with a fixing means (for example, a screw) to at least one fixing slot 24 - and preferably a pair of such slots 24, 31 - which is formed in the articulation arm 11 which is elongate in the translation direction of the valve 17 away from and towards the cam profile 19. The movement of the valve 17 away from and towards the cam profile 19 allows a variation of the angle A. In this manner, the user can adjust the position of the valve 17 in accordance with the working conditions, that is to say, in accordance with the need to take up any occurrences of mechanical play in terms of the assembly in the linearization lever assemblies and inversion of the plough.

With particular reference to Figures 8 to 11, in some embodiments the interception valve 17 is preferably moved away from and towards the cam profile 19 by means of an auxiliary cam 28. Preferably, the auxiliary cam 28 is rotatably connected to the articulation arm 11. The rotatable connection of the auxiliary cam 28 is such that the rotation of the auxiliary cam 28 allows a translational movement of the interception valve 17 with respect to the articulation arm 11 away from and towards the cam profile 19. Preferably, the auxiliary cam 28 defines along the fixing slot 24 the position at which the interception valve 17 is fixed. Preferably, the auxiliary cam 28 comprises a multi-holed plate 23 which is in the form of a flattened cylindrical disk and which has a row of holes 25 which are arranged in a helix so as to have mutually different radial spacings with respect to the axis of the plate 23, these holes 25 being capable of each defining a different position of the valve 17 with respect to the cam profile 19. Preferably, the auxiliary cam 28 further comprises a seat 29 which is formed in the articulation arm 11 and which is delimited by a peripheral circular edge 30 in a raised manner with respect to the continuity of the surface of the articulation arm 11, the peripheral circular edge 30 allowing rotation of the plate 23 with respect to the axis of the same peripheral circular edge 30 which coincides with the axis of the plate 23. The plate 23 may be fixed (preferably with a single fixing means) to the fixing slot 24 and the interception valve 17 at any hole which is selected from the row of holes 25 which have a different radial spacing with respect to the axis of the plate 23. In another configuration without the peripheral circular edge 30, the plate 23 is an eccentric circular plate which rotates outside the individual geometric centre so as to convert the individual rotational movement into translational movement of the valve 17 away from and towards the cam profile 19. In the configuration, the plate 23 can be rotatably fixed to the articulation arm 11 or to the interception valve 17. The inversion step of the plough 1, with which one or other of the two rows of ploughing elements 26 are brought into an operative ploughing position, is preceded by a linearization step, in which the linearization actuator 12 presses on the frame 13, causing the articulation arm 11 to rotate about the articulation axis 14. Consequently, the feeler 18 of the valve 17 is caused to move in translation on the cam profile 19 of the inversion arm 7. It is therefore evident that the feeler 18 advantageously acts as a cam follower.

The articulation arm 11 is rotated about the articulation axis 14 until the valve 17 is completely closed and interrupts the flow of pressurized oil to the linearization actuator 12. At this point, the linearization actuator 12 has caused the desired linearization action and the peak of pressure generated by the closure of the interception valve 17 will control in known manner the inversion device 4. In practice, the flow of pressurized oil activates the inversion actuator 6 which presses on the actuation arm 9. The inversion actuator 6 being secured in a pivotable manner to a pin 22 which is fixedly joined to the mount 8, the actuation of the inversion actuator 6 brings about the rotation of the frame 13 of the plough about the inversion axis X until completing a 180° inversion in order to cause the respective rows of ploughing elements 26 to be alternatively operational on the ground to be ploughed.

The invention thereby solves the problem set out by achieving a number of advantages, including:
- eliminating all the movable elements which are connected to the valve, eliminating possible wear and possible malfunctions caused by the damage to the portions with the possibility of compromising the structural integrity of the plough,
- protected position of the valve by preventing possible damage thereto by impacts with foreign bodies (for example, rocks, ground) during the rotation, ensuring durable operation over time,
- possibility of adjusting the kinematic operating system of the valve, decreasing or increasing the angle A at which the rotation of the plough starts. In this manner, the final user can adjust the position of the valve in accordance with the working conditions, that is to say, in accordance with the need to take up possible occurrences of mechanical play in terms of assembly in the linearization lever assemblies and inversion of the plough,
- still using the same components, it is possible to adjust the kinematic operating system of the valve so that it acts correctly on the base of the various configurations of the plough.

## Claims

1. A mounted reversible plough (1) including an attachment member (2) for attachment to a tractor, an inversion device (4) which is hinged to the attachment member (2) about an inversion axis (X), an inversion actuator (6) between the attachment member (2) and the inversion device (4), a frame (13) which carries a double series of ploughing elements (26) which are alternately operative in accordance with the position of the inversion device (4) about the inversion axis (X), the frame (13) being secured to the inversion device (4) by means of an articulation arm (11) and a linearization actuator (12) of the frame (13) and including an adjustment actuator (16) of the working width (L) of the ploughing elements (26) in order to vary the working width (L) between consecutive ploughing elements (26), wherein the articulation arm (11) is hinged to the frame (13) at a first end thereof about a linearization axis (15) of the frame (13) and it is hinged to the inversion device (4) at a second opposite end thereof about an articulation axis (14) and wherein the linearization actuator (12) is actuated by a pressurized fluid, the flow of which can be intercepted by means of a valve (17) in order to limit the linearization of the frame (13) which is controlled by the linearization actuator (12) when the frame (13) is actuated so as to rotate about the inversion axis (X), **characterized in that** the valve (17) is actuated according to the relative angular position (A) of the articulation arm (11) with respect to the inversion axis (X), wherein the valve (17) is actuated by a cam profile (19) and a cam follower (18) which are carried on the inversion device (6) and on the articulation arm (11), respectively, or vice versa.

2. A plough (1) according to claim 1, wherein the cam profile (19) or the cam follower (18) are carried on the inversion device at the articulation axis (14).

3. A plough (1) according to any one of the preceding claims, wherein the articulation arm (11) and the linearization actuator (12) form opposite sides of an articulated quadrilateral (10).

4. A plough (1) according to claim 3, wherein the remaining sides of the quadrilateral (10) are formed by the inversion device (6) between the articulation axis (14) and an axis for rotatably securing a first end of the linearization actuator (12) at the side directed towards the inversion device (6) and by the frame (13) between the linearization axis (15) and an axis for rotatably securing a second opposite end of the linearization actuator (12).

5. A plough (1) according to one or more of the preceding claims, wherein the articulation arm (11) is at least partially enclosed and the valve (17) is at least partially received and sheltered by the enclosure of the arm.

6. A plough (1) according to one or more of claims 1 to 5, wherein the cam profile (19) and the position of the valve (17) relative thereto are selected so that the angle (A) of the articulation arm (11) with respect to the inversion axis (X) is constant and independent of the adjustment of the working width (L) between consecutive ploughing elements (26).

7. A plough (1) according to one or more of claims 1 to 6, wherein the interception valve (17) is fixed to the articulation arm (11) in a movable manner towards and away from the cam profile (19).

8. A plough (1) according to claim 7, wherein there is provided an auxiliary cam (28) which is interposed between the articulation arm (11) and the interception valve (17) in order to adjust the position of the interception valve (17) along the articulation arm (11).

9. A plough (1) according to claim 8, wherein the auxiliary cam (28) is fixed in a rotatable manner to the articulation arm (11).

10. A plough (1) according to claim 8, wherein the auxiliary cam (28) is fixed in a rotatable manner to the interception valve (17).

11. A plough (1) according to one or more of claims 8 to 10, wherein the auxiliary cam (28) comprises a multi-holed plate (23) which has a row of holes (25) which are arranged so as to have mutually different radial spacings with respect to the axis of the plate (23), the holes (25) being capable of each defining a different position of the valve (17) with respect to the cam profile (19).

12. A plough (1) according to claim 11, wherein the holes (25) are arranged in a helix.

13. A plough (1) according to claim 11 or claim 12, wherein the plate (23) is in the form of a flattened cylindrical disk.

14. A plough (1) according to one or more of claims 11 to 13, wherein the auxiliary cam (28) comprises a seat (29) which is formed in the articulation arm (11) and which is delimited by a circular peripheral edge (30) in a raised manner with respect to the continuity of the surface of the articulation arm (11), the circular peripheral edge (30) allowing the rotation of the plate (23) with respect to the axis of the same circular peripheral edge (30).

15. A plough (1) according to claim 14, wherein the axis of the same circular peripheral edge (30) coincides with the axis of the plate (23).

16. A plough (1) according to one or more of claims 11 to 15, wherein the plate (23) is fixed to a fixing slot (24) and the interception valve (17) at a hole selected from the row of holes (25).

17. A plough (1) according to one or more of claims 11 to 13, wherein the plate (23) is eccentric with respect to a geometric centre thereof so as to convert the individual rotational movement into a translational movement of the valve (17) away from and towards the cam profile (19).

18. A plough (1) according to one or more of claims 11 to 17, wherein the plate (23) is rotatably fixed to the articulation arm (11) or to the interception valve (17).

## Patentansprüche

1. Reversibler Anbaudrehpflug (1) mit einem Befestigungselement (2) zur Befestigung an einem Traktor, einer Umkehrvorrichtung (4), die am Befestigungselement (2) um eine Umkehrachse (X) angelenkt ist, einem Umkehraktuator (6) zwischen dem Befestigungselement (2) und der Umkehrvorrichtung (4), einem Rahmen (13), der eine Doppelreihe von Pflugelementen (26) trägt, die gemäß der Position der Umkehrvorrichtung (4) um die Umkehrachse (X) abwechselnd wirksam sind, wobei der Rahmen (13) an der Umkehrvorrichtung (4) mittels eines Gelenkarms (11) und eines Linearisierungsaktuators (12) des Rahmens (13) befestigt ist und einen Aktuator (16) zur Einstellung der Arbeitsbreite (L) der Pflugelemente (26) umfasst, um die Arbeitsbreite (L) zwischen aufeinanderfolgenden Pflugelementen (26) zu verändern, wobei der Gelenkarm (11) an einem ersten Ende des Rahmens (13) um eine Linearisierungsachse (15) des Rahmens (13) angelenkt ist und an einem gegenüberliegenden zweiten Ende davon um eine Gelenkachse (14) an der Umkehrvorrichtung (4) angelenkt ist und wobei der Linearisierungsaktuator (12) durch ein unter Druck stehendes Fluid betätigt wird, dessen Durchfluss mittels eines Ventils (17) unterbrochen werden kann, um die Linearisierung des Rahmens (13) zu begrenzen, die durch den Linearisierungsaktuator (12) gesteuert wird, wenn der Rahmen (13) zum Drehen um die Umkehrachse (X) betätigt wird, **dadurch gekennzeichnet, dass** das Ventil (17) gemäß der relativen Winkelposition (A) des Gelenkarms (11) in Bezug auf die Umkehrachse (X) betätigt wird, wobei das Ventil (17) durch ein Nockenprofil (19) und einen Nockenstößel (18) betätigt wird, die an der Umkehrvorrichtung (6) bzw. am Gelenkarm (11), oder umgekehrt, getragen werden.

2. Pflug (1) nach Anspruch 1, wobei das Nockenprofil (19) oder der Nockenstößel (18) an der Umkehrvorrichtung auf der Gelenkachse (14) getragen werden.

3. Pflug (1) nach einem der vorhergehenden Ansprüche, wobei der Gelenkarm (11) und der Linearisierungsaktuator (12) gegenüberliegende Seiten eines Gelenkvierecks (10) bilden.

4. Pflug (1) nach Anspruch 3, wobei die übrigen Seiten des Vierecks (10) durch die Umlenkvorrichtung (6) zwischen der Gelenkachse (14) und einer Achse zur drehbaren Befestigung eines ersten Endes des Linearisierungsaktuators (12) an der zur Umlenkvorrichtung (6) gerichteten Seite und durch den Rahmen (13) zwischen der Linearisierungsachse (15) und einer Achse zur drehbaren Befestigung eines zweiten gegenüberliegenden Endes des Linearisierungsaktuators (12) gebildet werden.

5. Pflug (1) nach einem oder mehreren der vorhergehenden Ansprüche, wobei der Gelenkarm (11) zumindest teilweise umschlossen ist und das Ventil (17) zumindest teilweise von der Umschließung des Armes aufgenommen und geschützt ist.

6. Pflug (1) nach einem oder mehreren der Ansprüche 1 bis 5, wobei das Nockenprofil (19) und die Position des Ventils (17) relativ dazu so gewählt sind, dass der Winkel (A) des Gelenkarms (11) in Bezug auf Umkehrachse (X) konstant ist und unabhängig von der Einstellung der Arbeitsbreite (L) zwischen aufeinanderfolgenden Pflugelementen (26) ist.

7. Pflug (1) nach einem oder mehreren der Ansprüche 1 bis 6, wobei das Unterbrechungsventil (17) am Gelenkarm (11) beweglich zum Nockenprofil hin (19) und von diesem weg befestigt ist.

8. Pflug (1) nach Anspruch 7, wobei ein Zusatznocken (28) vorgesehen ist, der zwischen dem Gelenkarm (11) und dem Unterbrechungsventil (17) angeordnet ist, um die Position des Unterbrechungsventils (17) entlang des Gelenkarms (11) einzustellen.

9. Pflug (1) nach Anspruch 8, wobei der Zusatznocken (28) am Gelenkarm (11) drehbar befestigt ist.

10. Pflug (1) nach Anspruch 8, wobei der Zusatznocken (28) am Unterbrechungsventil (17) drehbar befestigt ist.

11. Pflug (1) nach einem oder mehreren der Ansprüche 8 bis 10, wobei der Zusatznocken (28) eine Platte mit mehreren Öffnungen (23) umfasst, die eine Reihe von Öffnungen (25) aufweist, die in zueinander unterschiedlichen Radialabständen in Bezug auf die Achse der Platte (23) angeordnet sind, wobei die Öffnungen (25) imstande sind, jeweils eine unterschiedliche Position des Ventils (17) in Bezug auf das Nockenprofil (19) zu definieren.

12. Pflug (1) nach Anspruch 11, wobei die Öffnungen (25) spiralförmig angeordnet sind.

13. Pflug (1) nach Anspruch 11 oder Anspruch 12, wobei die Platte (23) die Form einer abgeflachten zylindrischen Scheibe aufweist.

14. Pflug (1) nach einem oder mehreren der Ansprüche 11 bis 13, wobei der Zusatznocken (28) einen im Gelenkarm (11) ausgebildeten Sitz (29) aufweist, der durch einen kreisförmigen Umfangsrand (30) gegenüber der Kontinuität der Oberfläche des Gelenkarms (11) erhaben begrenzt ist, wobei der kreisförmige Umfangsrand (30) die Drehung der Platte (23) in Bezug auf die Achse des kreisförmigen Umfangsrands (30) ermöglicht.

15. Pflug (1) nach Anspruch 14, wobei die Achse des kreisförmigen Umfangsrands (30) mit der Achse der Platte (23) übereinstimmt.

16. Pflug (1) nach einem oder mehreren der Ansprüche 11 bis 15, wobei die Platte (23) an einem Befestigungsschlitz (24) und das Unterbrechungsventil (17) an einer aus der Reihe (25) von Öffnungen ausgewählten Öffnung befestigt ist.

17. Pflug (1) nach einem oder mehreren der Ansprüche 11 bis 13, wobei die Platte (23) exzentrisch zu deren geometrischem Mittelpunkt ist, um die individuelle Drehbewegung in eine Translationsbewegung des Ventils (17) weg vom und hin zum Nockenprofil (19) umwandeln.

18. Pflug (1) nach einem oder mehreren der Ansprüche 11 bis 17, wobei die Platte (23) am Gelenkarm (11) oder am Unterbrechungsventil (17) drehbar befestigt ist.

## Revendications

1. Charrue réversible montée (1) incluant un organe d'attachement (2) pour un attachement à un tracteur, un dispositif d'inversion (4) qui est articulé à l'organe d'attachement (2) autour d'un axe d'inversion (X), un actionneur d'inversion (6) entre l'organe d'attachement (2) et le dispositif d'inversion (4), un châssis (13) qui porte une double série d'éléments de labourage (26) qui sont fonctionnels alternativement en fonction de la position du dispositif d'inversion (4) autour de l'axe d'inversion (X), le châssis (13) étant fixé au dispositif d'inversion (4) au moyen d'un bras d'articulation (11) et d'un actionneur de linéarisation (12) du châssis (13) et incluant un actionneur d'ajustement (16) de la largeur de travail (L) des éléments de labourage (26) afin de faire varier la largeur de travail (L) entre des éléments de labourage (26) consécutifs, dans laquelle le bras d'articulation (11) est articulé au châssis (13) à une première extrémité de celui-ci autour d'un axe de linéarisation (15) du châssis (13) et il est articulé au dispositif d'inversion (4) à une deuxième extrémité opposée de celui-ci autour d'un axe d'articulation (14) et dans laquelle l'actionneur de linéarisation (12) est actionné par un fluide pressurisé dont l'écoulement peut être intercepté au moyen d'une vanne (17) afin de limiter la linéarisation du châssis (13) qui est commandée par l'actionneur de linéarisation (12) lorsque le châssis (13) est actionné de manière à tourner autour de l'axe d'inversion (X), **caractérisée en ce que** la vanne (17) est actionnée en fonction de la position angulaire relative (A) du bras d'articulation (11) par rapport à l'axe d'inversion (X), dans laquelle la vanne (17) est actionnée par un profil de came (19) et un suiveur de came (18) qui sont portés respectivement sur le dispositif d'inversion (6) et sur le bras d'articulation (11) ou vice versa.

2. Charrue (1) selon la revendication 1, dans laquelle le profil de came (19) ou le suiveur de came (18) est porté sur le dispositif d'inversion au niveau de l'axe d'articulation (14).

3. Charrue (1) selon l'une quelconque des revendications précédentes, dans laquelle le bras d'articulation (11) et l'actionneur de linéarisation (12) forment des côtés opposés d'un quadrilatère (10) articulé.

4. Charrue (1) selon la revendication 3, dans laquelle les côtés restants du quadrilatère (10) sont formés par le dispositif d'inversion (6) entre l'axe d'articulation (14) et un axe pour fixer de manière rotative une première extrémité de l'actionneur de linéarisation (12) au niveau du côté dirigé vers le dispositif d'inversion (6) et par le châssis (13) entre l'axe de linéarisation (15) et un axe de fixation de manière rotative d'une seconde extrémité opposée de l'actionneur de linéarisation (12).

5. Charrue (1) selon une ou plusieurs des revendications précédentes, dans laquelle le bras d'articulation (11) est au moins partiellement enveloppé et la vanne (17) est au moins partiellement reçue et protégée par l'enveloppe du bras.

6. Charrue (1) selon une ou plusieurs des revendications 1 à 5, dans laquelle le profil de came (19) et la position de la vanne (17) par rapport à celui-ci sont sélectionnés de sorte que l'angle (A) du bras d'articulation (11) par rapport à l'axe d'inversion (X) soit constant et indépendant de l'ajustement de la largeur de travail (L) entre des éléments de labourage (26) consécutifs.

7. Charrue (1) selon une ou plusieurs des revendications 1 à 6, dans laquelle la vanne d'interception (17) est fixée au bras d'articulation (11) d'une manière mobile vers et à l'écart du profil de came (19).

8. Charrue (1) selon la revendication 7, dans laquelle il est prévu une came auxiliaire (28) qui est interposée entre le bras d'articulation (11) et la vanne d'interception (17) afin d'ajuster la position de la vanne d'interception (17) le long du bras d'articulation (11).

9. Charrue (1) selon la revendication 8, dans laquelle la came auxiliaire (28) est fixée d'une manière rotative au bras d'articulation (11).

10. Charrue (1) selon la revendication 8, dans laquelle la came auxiliaire (28) est fixée d'une manière rotative à la vanne d'interception (17).

11. Charrue (1) selon une ou plusieurs des revendications 8 à 10, dans laquelle la came auxiliaire (28) comprend une plaque à plusieurs trous (23) comportant une rangée de trous (25) qui sont agencés de manière à avoir des espacements radiaux mutuellement différents par rapport à l'axe de la plaque (23), les trous (25) étant chacun capables de définir une position différente de la vanne (17) par rapport au profil de came (19).

12. Charrue (1) selon la revendication 11, dans laquelle les trous (25) sont agencés en spirale.

13. Charrue (1) selon la revendication 11 ou 12, dans laquelle la plaque (23) a la forme d'un disque cylindrique aplati.

14. Charrue (1) selon une ou plusieurs des revendications 11 à 13, dans laquelle la came auxiliaire (28) comprend un siège (29) qui est formé dans le bras d'articulation (11) et qui est délimité par un bord périphérique circulaire (30) d'une manière relevée par rapport à la continuité de la surface du bras d'articulation (11), le bord périphérique circulaire (30) permettant la rotation de la plaque (23) par rapport à l'axe du même bord périphérique circulaire (30).

15. Charrue (1) selon la revendication 14, dans laquelle l'axe du même bord périphérique circulaire (30) coïncide avec l'axe de la plaque (23).

16. Charrue (1) selon une ou plusieurs des revendications 11 à 15, dans laquelle la plaque (23) est fixée à une fente de fixation (24) et à la vanne d'interception (17) au niveau d'un trou sélectionné dans la rangée de trous (25).

17. Charrue (1) selon une ou plusieurs des revendications 11 à 13, dans laquelle la plaque (23) est excentrée par rapport à un centre géométrique de celle-ci de manière à convertir le mouvement rotationnel individuel en un mouvement translationnel de la vanne (17) à l'écart du et vers le profil de came (19).

18. Charrue (1) selon une ou plusieurs des revendications 11 à 17, dans laquelle la plaque (23) est fixée de manière rotative au bras d'articulation (11) ou à la vanne d'interception (17).
